# EUROPÄISCHE PATENTSCHRIFT

(11) **EP 2 462 325 B1**
(45) Veröffentlichungstag und Bekanntmachung des Hinweises auf die Patenterteilung: **23.04.2014**
(21) Anmeldenummer: 10734108.3
(22) Anmeldetag: 15.07.2010
(51) Int. Cl.: F01M 5/02, B60W 10/06, B60W 10/08, B60W 10/10, B60W 30/194, F16H 57/04, B60W 20/00

(54) **VERFAHREN UND VORRICHTUNG ZUM ERWÄRMEN VON MOTOR- UND GETRIEBEÖL EINES HYBRIDFAHRZEUGES**
METHOD AND DEVICE FOR HEATING ENGINE AND TRANSMISSION OIL OF A HYBRID VEHICLE
PROCÉDÉ ET DISPOSITIF PERMETTANT DE RÉCHAUFFER UNE HUILE MOTEUR ET UNE HUILE DE TRANSMISSION D'UN VÉHICULE HYBRIDE

(30) Priorität: 07.08.2009 DE 102009028326
(43) Veröffentlichungstag der Anmeldung: 13.06.2012
(73) Patentinhaber: Robert Bosch GmbH, 70442 Stuttgart (DE)
(72) Erfinder: RIES-MUELLER, Klaus, 74906 Bad Rappenau (DE)
(86) Internationale Anmeldenummer: PCT/EP2010/060184
(87) Internationale Veröffentlichungsnummer: WO 2011/015436

(56) Entgegenhaltungen:
- EP-A2- 0 566 854
- DE-A1- 10 332 497
- DE-A1- 19 745 167
- DE-A1-102007 061 562
- GB-A- 805 715
- GB-A- 2 341 830

## Beschreibung

Die vorliegende Erfindung betrifft ein Verfahren zum Erwärmen von Motor- und/oder Getriebeöl eines Hybridfahrzeugs gemäß dem Oberbegriff des Anspruches 1 und ein Erwärmungseinrichtung für Motor- und/oder Getriebeöl eines Hybridfahrzeuges gemäß dem Oberbegriff des Anspruches 9.

### Stand der Technik

Von der Kraftfahrzeugindustrie werden in zunehmenden Maße Hybridfahrzeuge entwickelt oder hergestellt. Die Hybridfahrzeuge als Plug-In Hybridfahrzeuge verfügen dabei über einen Verbrennungsmotor und einen Elektromotor. Das Hybridfahrzeug kann somit mittels eines fossilen Kraftstoffes durch den Verbrennungsmotor und/oder durch elektrische Energie aus Batterien mittels des Elektromotors angetrieben werden. Das Aufladen der Batterien als Traktionsbatterien zum Antrieb des Plug-In-Hybridfahrzeuges erfolgt dabei beim Stillstand des Hybridfahrzeuges an einem externen Stromnetz, z. B. mit einer Spannung von 220 V. Hierzu ist das Hybridfahrzeug mittels eines Stromkabels und einer Steckverbindung an dieses externe Stromnetz anzuschließen. Zum Aufladen der Batterien des Hybridfahrzeuges wird ein Ladegerät benötigt, welche die Wechselspannung des externen Stromnetzes in Gleichspannung umwandelt und die Spannung auf ein zum Aufladen der Batterien notwendiges Maß transformiert. Ein derartiges, in das Hybridfahrzeug eingebautes Ladegerät gibt dabei während des Aufladens der Batterien des Hybridfahrzeuges Abwärme ab, die im Bereich von mehreren 100 Watt bis zu mehreren kW liegt.

Die DE 10 2008 037 820 A1 zeigt ein Verfahren zum Erwärmen des Motoröls eines Dieselmotors eines Hybridelektrofahrzeuges. Das Hybridelektrofahrzeug ist mit einem Elektroantriebssystem mit einem Kühlkreislauf und einem Wärmetauscher versehen. Mittels des Kühlkreislaufes und des Wärmetauschers wird die Abwärme des Elektroantriebssystemes an das Motoröl des Dieselmotors weitergeleitet. Das Elektroantriebssystem wird somit mittels des Kühlkreislaufes gekühlt und das Motoröl des Dieselmotors erwärmt.

Aus der GB 2 341 830 A (vgl. Oberbegriff des Anspruchs 1, bzw. 9) ist ein Fahrzeug mit einer Wärmekraftmaschine, einer Batterie und einer Kontrolleinrichtung bekannt. Die Wärmekraftmaschine verfügt über einen Temperaturmanagementkreislauf zur Regulierung der Temperatur der Wärmekraftmaschine und der Batterie.

Die GB 805 715 A zeigt eine elektromagnetische Heizeinrichtung für Verbrennungsmotoren mit einem hohlen Eisenkern, so dass Motorflüssigkeit beim Durchleiten erwärmt werden kann.

Aus der DE 103 32 497 A1 ist ein Verfahren zur Verkürzung der Warmlaufphase eines Kraftfahrzeuges mit einem Verbrennungsmotor bekannt. Das Kraftfahrzeug umfasst mindestens ein Getriebe sowie zugeordnete Ölkreisläufe und ein elektrisches Bordnetz bestehend aus Starter, Generator und Speicher.

### Offenbarung der Erfindung

### Vorteile der Erfindung

Erfindungsgemäßes Verfahren zum Erwärmen von Motor- und/oder Getriebeöl eines Hybridfahrzeuges, insbesondere Plug-In-Hybridfahrzeuges, mit einem Verbrennungsmotor und einem Elektromotor, wobei das Getriebeöl mittels der Abwärme eines Ladegerätes für wenigstens eine Batterie und/oder der Abwärme der wenigstens einen Batterie erwärmt wird und/oder das Motoröl mittels der Abwärme eines Ladegerätes für wenigstens eine Batterie und/oder der Abwärme der wenigstens einen Batterie erwärmt wird und ein Fluidkreislauf mit Motoröl als Fluid mit dem Ladegerät und/oder mit der wenigstens einen Batterie thermisch gekoppelt ist zum mittelbaren oder unmittelbaren Erwärmen des Motoröles.

Die Abwärme des Ladegerätes und/oder der Batterie kann damit zum Erwärmen des Motor- und/oder Getriebeöles genutzt werden. Verbrennungsmotoren weisen bei niedrigen Motor- und/oder Getriebeöltemperaturen einen höheren Verbrauch an Kraftstoff auf als bei höheren Motor- und/oder Getriebeöltemperaturen. Erwärmen des Motor- und/oder Getriebeöles bewirkt somit bei einem Start des Verbrennungsmotors, dass Kraftstoff, z. B. im Bereich bis zu 10 %, eingespart werden kann gegenüber einem nicht erwärmten Motor- und/oder Getriebeöl. Damit kann der Wirkungsgrad des Hybridfahrzeuges in vorteilhafter Weise erhöht werden. Die Abwärme des Ladegerätes für die wenigstens eine Batterie und die Abwärme der wenigstens einen Batterie fällt beim Laden der Batterie ohnehin an, so dass zum Erwärmen des Motor- und/oder Getriebeöles keine zusätzliche Energie in vorteilhafter Weise benötigt wird.

Insbesondere wird das Motor- und/oder Getriebeöl während des Aufladens der wenigstens einen Batterie erwärmt und/oder wird während des Stillstandes des Hybridfahrzeuges erwärmt. Die Abwärme des Ladegerätes und/oder der Batterie wird somit ohne zeitliche Verzögerung an das Motor- und/oder Getriebeöl weitergeleitet.

In einer weiteren Ausgestaltung wird das Motor- und/oder Getriebeöl vor Fahrtantritt erwärmt.

In einer ergänzenden Ausführungsform wird die Abwärme zu dem Motor- und/oder Getriebeöl mittels Wärmekonvektion und/oder Wärmeleitung und/oder Wärmestrahlung geleitet.

Vorzugsweise ist ein Fluidkreislauf, insbesondere mit Getriebeöl als Fluid, mit dem Ladegerät und/oder mit der wenigstens einen Batterie thermisch gekoppelt zum mittelbaren oder unmittelbaren Erwärmen des Motor- und/oder Getriebeöles. Bei einem unmittelbaren Erwärmen des Motor- und/oder Getriebeöles wird ohne einen Zwischen-Fluidkreislauf das Motor- und/oder Getriebeöl unmittelbar am Ladegerät und/oder der Batterie erwärmt. Bei einem mittelbaren Erwärmen des Motor- und/oder Getriebeöles wird die Abwärme des Ladegerätes und/oder der wenigstens einen Batterie zunächst auf einen Zwischen-Fluidkreislauf, der ebenfalls ein Fluidkreislauf ist, übertragen und anschließend von dem Zwischen-Fluidkreislauf auf den Fluidkreislauf mit dem Motor- und/oder Getriebeöl mittels eines Wärmetauschers übertragen.

In einer Variante wird der Fluidkreislauf von der Abwärme des Ladegerätes und/oder wenigstens einen Batterie erwärmt.

Zweckmäßig wird eine Ist-Temperatur des Motor- und/oder Getriebeöles erfasst, die Ist-Temperatur mit einer Soll-Temperatur des Motor- und/oder Getriebeöles verglichen wird und das Motor und/oder Getriebeöl wird bei einer Abweichung der Ist-Temperatur von der Soll-Temperatur erwärmt.

In einer weiteren Ausgestaltung wird für das Erwärmen des Motor- und/oder Getriebeöles nicht benötigte Abwärme in eine Umgebung des Hybridfahrzeuges und/oder in den Fahrzeuginnenraum geleitet. Nach dem Erwärmen des Motor- und/oder Getriebeöles auf die erforderliche Soll-Temperatur kann anschließend am Ladegerät und/oder an der wenigstens einen Batterie anfallende Abwärme an die Umgebung und/oder in den Fahrzeuginnenraum abgeleitet werden zur Einhaltung einer Soll-Temperatur des Ladegerätes und/oder der wenigstens einen Batterie.

In eine weiteren Ausgestaltung wird die Abwärme des Ladegerätes und/oder der wenigstens einen Batterie in einem Wärmespeicher, z. B. einem Latentwärmespeicher, gespeichert. Während des Aufladens anfallende Abwärme des Ladegerätes und der Batterie kann somit zu einem späteren Zeitpunkt während der Fahrt des Hybridfahrzeuges beispielsweise zum Erwärmen eines Fahrzeuginnenraumes, des Motoröles und/oder des Getriebeöles genutzt werden.

In einer zusätzlichen Ausgestaltung wird mittels der Abwärme des Ladegerätes unter der wenigstens einen Batterie zunächst nur das Motoröl auf eine vorgegebene Solltemperatur erwärmt.

In einer zusätzlichen Variante wird nach dem Erwärmen des Motoröls auf eine vorgegebene Solltemperatur nur das Getriebeöl auf eine vorgegebene Solltemperatur erwärmt.

In einer weiteren Ausführungsform wird nach dem Erwärmen des Motoröls auf eine vorgegebene Solltemperatur und/oder nach dem Erwärmen des Getriebeöles auf eine vorgegebene Solltemperatur nur der Fahrzeuginnenraum mittels der Abwärme des Ladegerätes und/oder der wenigstens einen Batterie erwärmt.

Erfindungsgemäße Erwärmungseinrichtung für Motor- und/oder Getriebeöl eines Hybridfahrzeuges, insbesondere Plug-In-Hybridfahrzeuges, mit einem Verbrennungsmotor und einem Elektromotor, umfassend: einen Fluidkreislauf mit einem Fluid, wenigstens eine Wärmequelle zur Erwärmung des Motor- und/oder Getriebeöles mittels des Fluidkreislaufes, wobei der Fluidkreislauf mit einem Ladegerät und/oder wenigstens einer Batterie thermisch gekoppelt ist, so dass die wenigstens eine Wärmequelle das Ladegerät und/oder die wenigstens eine Batterie ist, um mittels der Abwärme des Ladegerätes und/oder der wenigstens einen Batterie das Getriebeöl zu erwärmen und/oder der Fluidkreislauf mit einem Ladegerät und/oder wenigstens einer Batterie thermisch gekoppelt ist, so dass die wenigstens eine Wärmequelle das Ladegerät und/oder die wenigstens eine Batterie ist, um mittels der Abwärme des Ladegerätes und/oder der wenigstens einen Batterie das Motoröl zu erwärmen und das Fluid des Fluidkreislaufes das Motoröl ist und das Motoröl in dem Fluidkreislauf zu dem Ladegerät und/oder der wenigstens einen Batterie leitbar ist zur Erwärmung des Motoröles an dem Ladegerät und/oder der wenigstens einen Batterie.

Vorteilhafterweise kann damit die Abwärme des Ladegerätes unter der wenigstens einen Batterie genutzt werden, um das Motoröl und/oder das Getriebeöl zu erwärmen. Der Kraftstoffverbrauch des Hybridfahrzeuges kann damit beim Start des Verbrennungsmotores und dem Antrieb des Hybridfahrzeuges mittels des Verbrennungsmotores in vorteilhafter Weise gesenkt werden. Zusätzliche Energie zum Erwärmen des Verbrennungsmotores ist nicht erforderlich, weil die Abwärme des Ladegerätes und/oder der wenigstens einen Batterie zum Erwärmen des Motor- und/oder Getriebeöles genutzt werden kann.

In einer weiteren Ausführungsform ist das Fluid des Fluidkreislaufes das Getriebeöl und das Getriebeöl ist in dem Fluidkreislauf zu dem Ladegerät und/oder der wenigstens einen Batterie leitbar zur Erwärmung des Getriebeöles an dem Ladegerät und/oder der wenigstens einen Batterie. In dem Fluidkreislauf strömt Motor- und/oder Getriebeöl zu dem Ladegerät und/oder der wenigstens einen Batterie. An dem Ladegerät und/oder der wenigstens einen Batterie wird mittels eines Wärmetauschers die Wärme von dem Ladegerät und/oder der wenigstens einen Batterie auf das Motor- und/oder Getriebeöl übertragen zum Erwärmen des Motor- und/oder Getriebeöles. Ein zusätzlicher Zwischen-Fluidkreislauf ist somit nicht erforderlich.

Insbesondere umfasst die Erwärmungseinrichtung einen Zwischen-Fluidkreislauf, der thermisch mit dem Ladegerät und/oder mit der wenigstens einen Batterie gekoppelt ist.

In einer weiteren Ausgestaltung ist der Zwischen-Fluidkreislauf mittels eines M-Wärmeaustauscher mit dem Motoröl thermisch gekoppelt und/oder ist mittels eines G-Wärmeaustauschers mit dem Getriebeöl thermisch gekoppelt und/oder ist mittels eines F-Wärmetauschers mit einem Fahrzeuginnenraum thermisch gekoppelt. In dem Zwischen-Fluidkreislauf strömt eine Kühlflüssigkeit, d. h. Nichtmotor- und/oder Getriebeöl. Mittels des Fluides des Zwischen-Fluidkreislaufes wird der M-Wärmetauscher und/oder der G-Wärmetauscher erwärmt und von dem M-Wärmetauscher wird das Motoröl und von dem G-Wärmetauscher wird das Getriebeöl erwärmt. Mittels eines F-Wärmetauschers kann auch der Fahrzeuginnenraum erwärmt werden. Vorzugsweise ist dabei am F-Wärmetauscher auch ein Gebläse angeordnet, mittels dem Luft durch den F-Wärmetauscher geleitet werden kann, welche anschließend in den Fahrzeuginnenraum eingeleitet wird.

In einer ergänzenden Variante umfasst die Erwärmungseinrichtung einen L-Temperatursensor zur Erfassung einer Ist-Temperatur des Ladegerätes und/oder einen B-Temperatursensor zur Erfassung einer Ist-Temperatur der wenigstens einen Batterie.

In einer weiteren Variante umfasst die Erwärmungseinrichtung einen F-Temperatursensor zur Erfassung einer Ist-Temperatur des Fahrzeuginnenraumes und/oder einen M-Temperatursensor zur Erfassung einer Ist-Temperatur des Motoröls und/oder einen G-Temperatursensor zur Erfassung einer Ist-Temperatur des Getriebeöles. Mittels der von den Temperatursensoren erfassten Temperaturen des Ladegerätes, der wenigstens einen Batterie, des Motoröls, des Getriebeöles und/oder der Temperatur des Fahrzeuginnenraumes können mittels einer Steuerungseinrichtung die erfassten Ist-Temperaturen mit Soll-Temperaturen verglichen werden. Zum Erreichen der gewünschten Soll-Temperaturen kann anschließend von der Steuerungseinrichtung das Erwärmen des Motor- und/oder Getriebeöles sowie des Fahrzeuginnenraumes gesteuert und/oder geregelt werden sowie das Kühlen des Ladegerätes und/oder der wenigstens einen Batterie gesteuert und/oder geregelt werden.

In einer weiteren Ausgestaltung ist von der Erwärmungseinrichtung ein in dieser Schutzrechtsanmeldung beschriebenes Verfahren ausführbar.

Ein erfindungsgemäßes Kraftfahrzeug umfasst eine in dieser Schutzrechtsanmeldung beschriebene Erwärmungseinrichtung und/oder von dem Kraftfahrzeug ist ein in dieser Schutzrechtsanmeldung beschriebenes Verfahren ausführbar.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: einen schematisiertes Systembild einer Erwärmungseinrichtung in einem ersten Ausführungsbeispiel,
- Fig.2: einen schematisiertes Systembild der Erwärmungseinrichtung in einem zweiten Ausführungsbeispiel und
- Fig. 3: eine Ansicht eines Plug-In-Hybridfahrzeuges.

### Ausführungsformen der Erfindung

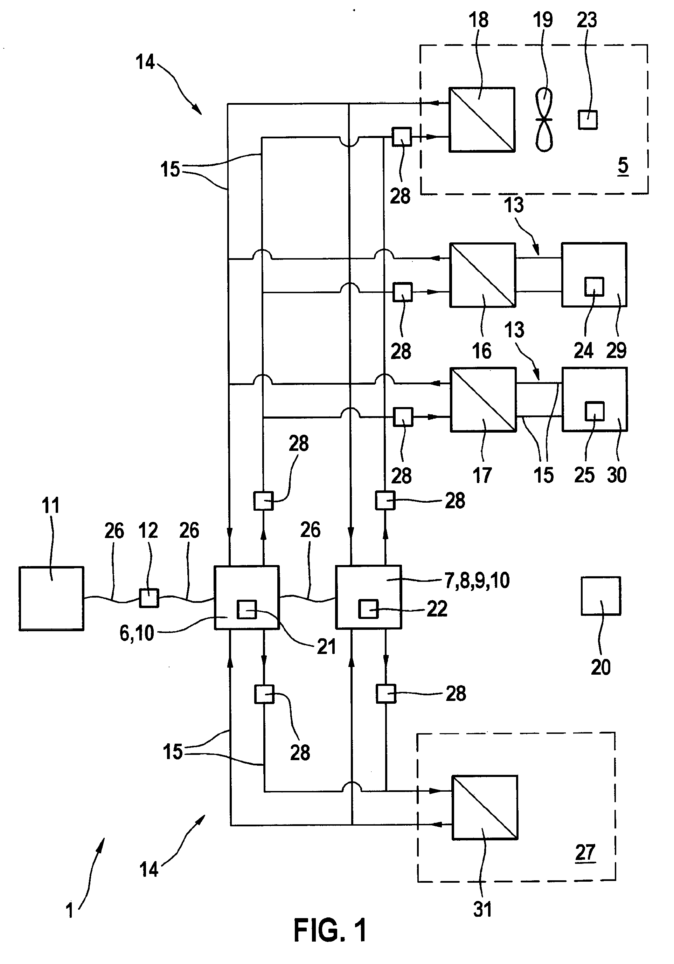

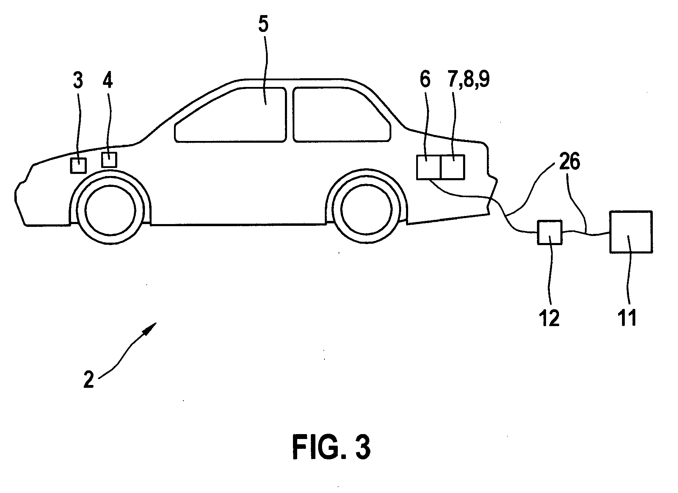

In Fig. 1 ist ein schematisiertes Systembild einer Erwärmungseinrichtung 1 in einem ersten Ausführungsbeispiel für ein Hybridfahrzeug 2 dargestellt. Das Hybridfahrzeug 2 als Plug-In-Hybridfahrzeug weist einen Verbrennungsmotor 3 und einen Elektromotor 4 auf (Fig. 3). Der Verbrennungsmotor 3 wird mittels Kraftstoff aus einem nicht dargestellten Kraftstofftank angetrieben. Der Elektromotor 4 wird mittels elektrischen Stroms aus einer Batterie 7 betrieben. Sowohl der Verbrennungsmotor 3 als auch der Elektromotor 4 dienen zum Antrieb des Hybridfahrzeuges 2. Das Plug-In-Hybridfahrzeug kann ausschließlich mittels elektrischer Energie aus der Batterie 7, z. B. mit einer elektrischen Reichweite von 100 km, fahren. Während des Stillstandes des Hybridfahrzeuges 2 wird das Hybridfahrzeug 2 mittels einer Steckverbindung 12 und eines Stromkabels 26 an ein externes Stromnetz 11 während des Stillstandes des Hybridfahrzeuges 2 angeschlossen. Mittels der elektrischen Energie aus dem externen Stromnetz 11 werden die Batterien 7 aufgeladen.

Die elektrische Wechselspannung des externen Stromnetzes 11 wird mittels eines Ladegerätes 6 (Fig. 1 bis 3) in Gleichspannung umgewandelt und dabei außerdem auf ein anderes, z. B. niedrigeres, Spannungsniveau transformiert. Dieser Gleichstrom wird ebenfalls mittels des Stromkreiskabels 26 zu der als Lithiumionenbatterie 9 ausgebildeten Traktionsbatterie 8 geleitet und mit diesem Strom wird die Traktionsbatterie 8 bzw. die Batterie 7 aufgeladen. Während des Aufladens der Batterie 7 fällt dabei am Ladegerät 6 und an den Batterien 7 Abwärme an. Die Abwärme am Ladegerät 6 liegt dabei im Bereich von einigen 100 Watt bis zu mehreren kW, je nachdem wie schnell die Batterien 7 aufgeladen werden. Bei einer Schnellladung der Batterien 7 können somit bis zu mehrere kW Wärme anfallen.

Ein Zwischen-Fluidkreislauf 14 ist thermisch mittels eines nicht dargestellten Wärmetauschers mit dem Ladegerät 6 und der Batterie 7 als Wärmequellen 10 gekoppelt. Dadurch kann die Abwärme des Ladegerätes 6 und der Batterie 7 auf Kühlflüssigkeit des Zwischen-Fluidkreislaufes 14 übertragen werden. Die Kühlflüssigkeit strömt somit durch die Leitungen 15 des Zwischen-Fluidkreislaufes 14 und wird dabei von einer nicht dargestellten Umwälzpumpe im Kreis umgewälzt.

An den Zwischen-Fluidkreislauf 14 ist ein F-Wärmetauscher 18 angeschlossen. Der F-Wärmetauscher 18 dient zum Erwärmen eines Fahrzeuginnenraumes 5 des Hybridfahrzeuges 2. Hierzu ist an dem F-Wärmetauscher 18 ein Gebläse 19 angeordnet. Mittels des Gebläses 19 wird Luft durch den F-Wärmetauscher 18 geleitet, so dass die Luft Wärme von der Kühlflüssigkeit des Zwischen-Fluidkreislaufes 14 aufnehmen kann, so dass diese Luft erwärmt und anschließend in den Fahrzeuginnenraum 5 eingeleitet wird. Ferner ist an den Zwischen-Fluidkreislauf 14 ein M-Wärmetauscher 16 angeschlossen. An den M-Wärmetauscher 16 ist außerdem ein Fluidkreislauf 13 mit Motoröl 29 angeschlossen. Der Fluidkreislauf 13 mit dem Motoröl 29 wird von einer nicht dargstellten Umwälzpumpe umgewälzt. Dadurch kann die Wärme in der Kühlflüssigkeit des Zwischen-Fluidkreislaufes 14 auf das Motoröl 29 mittels des M-Wärmetauschers 16 übertragen werden. In analoger Weise ist der Zwischen-Fluidkreislauf 14 auch an einen G-Wärmetauscher 17 angeschlossen. Ein weiterer Fluidkreislauf 13 mit Getriebeöl 30, der von einer nicht dargestellten Umwälzpumpe umgewälzt wird, strömt somit durch den G-Wärmetauscher 17. An dem G-Wärmetauscher 17 kann somit Wärme von dem Kühlmittel des Zwischen-Fluidkreislaufes 14 auf das Getriebeöl 30 übertragen werden zum Erwärmen des Getriebeöles 30.

Eine Umgebung 27 des Hybridfahrzeuges 2 kann mittels eines U-Wärmetauschers 31 von dem Zwischen-Fluidkreislauf 14 erwärmt werden. Dabei ist in Fig. 1 die Umgebung 27 des Hybridfahrzeuges 2 als strichlierter Rahmen dargestellt. In analoger Weise ist auch der Fahrzeuginnenraum 5 als strichlierter Rahmen in Fig. 1 dargestellt.

Mittels eines L-Temperatursensors 21 kann eine Ist-Temperatur des Ladegerätes 6 erfasst werden. Außerdem kann mittels eines B-Temperatursensors 22 die Ist-Temperatur der Batterie 7 erfasst werden. Ein F-Temperatursensor 23 erfasst die Temperatur des Fahrzeuginnenraumes 5, ein M-Temperatursensor 24 erfasst die Temperatur des Motoröls 29 und ein G-Temperatursensor 25 erfasst die Temperatur des Getriebeöls 30. Die von den Temperatursensoren 21, 22, 23, 24 und 25 erfassten Ist-Temperaturen werden dabei mittels nicht dargestellter Datenleitungen an eine Steuerungseinrichtung 20 weitergeleitet. Ferner sind in dem Zwischen-Fluidkreislauf 14 Ventile 28 angeordnet. Die Ventile 28 können dabei mittels nicht dargestellter Steuerungsleitungen von der Steuerungseinrichtung 20 betätigt werden. Mittels der Ventile 28 kann gesteuert und/oder geregelt werden, ob nur Abwärme aus dem Ladegerät 5, nur Abwärme aus den Batterien 7 oder Abwärme sowohl aus den Batterien 7 als auch dem Ladegerät 6 zum Erwärmen verwendet wird. Ferner kann mittels der Ventile 28 von der Steuerungseinrichtung 20 gesteuert und/oder geregelt werden, ob beispielsweise nur das Motoröl, nur das Motor- und/oder das Getriebeöl oder nur der Fahrzeuginnenraum 5 erwärmt wird. Die Steuerungseinrichtung 20 kann somit auswählen, ob das Motoröl 29, das Getriebeöl 30, der Fahrzeuginnenraum 5 und/oder die Umgebung 27 des Hybridfahrzeuges 2 erwärmt werden. Die Abwärme der Wärmequellen 10, d. h. des Ladegerätes 6 und der Batterie 7, können somit selektiv und optimiert zum Erwärmen eingesetzt werden.

Beispielsweise ist es möglich, zunächst die Abwärme des Ladegerätes 6 und der Batterie 7 ausschließlich zum Erwärmen des Motoröls 29 einzusetzen. Hierzu sind die Ventile 28 am F-Wärmetauscher 18, am G-Wärmetauscher 17 und am U-Wärmetauscher 31 zunächst geschlossen. Die Kühlflüssigkeit des Zwischen-Fluidkreislaufes 14 strömt somit ausschließlich durch den M-Wärmetauscher 16 und durch die nicht dargestellten Wärmetauscher an dem Ladegerät 6 und an der Batterie 7. Nach dem Erreichen einer vorgegebenen Solltemperatur des Motoröls 29 wird das Ventil 28 an dem M-Wärmetauscher 16 geschlossen und das Ventil 28 an dem G-Wärmetauscher 17 geöffnet. Somit wird ausschließlich das Getriebeöl 30 von der Abwärme des Ladegerätes 6 und der Batterie 7 erwärmt. Nach dem Erreichen einer vorgegebenen Soll-Temperatur des Getriebeöles 30, kann mittels der Abwärme des Ladegerätes 6 und der Batterie 7 ausschließlich der Fahrzeuginnenraum 5 erwärmt werden, indem die Ventile 28 an dem M-Wärmetauscher 16, dem G-Wärmetauscher 17 und dem U-Wärmetauscher 31 geschlossen sind und das Ventil 28 an dem F-Wärmetauscher 18 geöffnet und das Gebläse 19 eingeschaltet ist. Wenn auch im Fahrzeuginnenraum 5 die gewünschte Soll-Temperatur erreicht ist, kann die Abwärme des Ladegerätes 6 und der Batterie 7 ausschließlich an die Umgebung 27 mittels des U-Wärmetauschers 31 abgegeben werden. Hierzu sind die drei Ventile 28 an dem M-Wärmetauscher 16, dem G-Wärmetauscher 17 und dem F-Wärmetauscher 18 geschlossen und das Ventil 28 an dem U-Wärmetauscher 31 geöffnet, so dass die Abwärme des Ladegerätes 6 und der Batterie 7 ausschließlich durch den U-Wärmetauscher 21 an die Umgebung 27 des Hybridfahrzeuges 2 abgegeben wird.

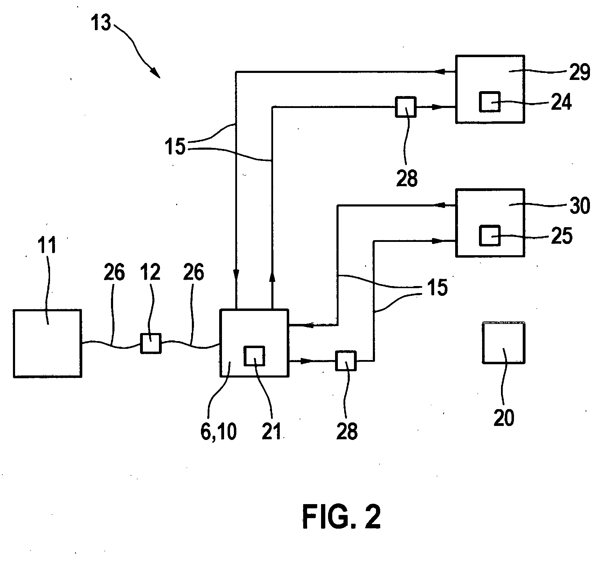

In Fig. 2 ist ein zweites Ausführungsbeispiel der Erwärmungseinrichtung 1 dargestellt. Im Nachfolgenden werden im Wesentlichen nur die Unterschiede zu dem ersten Ausführungsbeispiel gemäß Fig. 1 beschrieben. Die Erwärmungseinrichtung 1 weist zwei Fluidkreisläufe 13 auf. In einem ersten Fluidkreislauf 13 strömt Motoröl 29 zu einem nicht dargestellten Wärmetauscher an dem Ladegerät 6. Durch einen zweiten Fluidkreislauf 13 strömt Getriebeöl 30 zu einem nicht dargestellten Wärmetauscher an dem Ladegerät 6. Somit wird lediglich die Abwärme des Ladegerätes 6 zum Erwärmen des Motoröles 29 und des Getriebeöles 30 verwendet. Das Motoröl 29 und das Getriebeöl 30 wird unmittelbar zum Wärmetauscher am Ladegerät 6 geleitet, so dass das Motoröl 29 und das Getriebeöl 30 unmittelbar am Ladegerät 6 ohne einen Zwischen-Fluidkreislauf 14 erwärmt wird. Zur Steuerung, ob nur das Motoröl 29, nur das Getriebeöl 30 oder sowohl das Motoröl als auch das Getriebeöl 30 erwärmt wird, kann mittels der Steuerungseinrichtung 20 ein Ventil 28 jeweils in dem ersten und zweiten Fluidkreislauf 13 geöffnet oder geschlossen werden. Dabei sind auch Teilöffnungen des Ventiles 29 möglich, so dass auch Zwischenstellungen zum Erwärmen des Motoröls 29 und des Getriebeöles 30 möglich sind. Dies gilt für die Ventile 28 auch in analoger Weise für das erste Ausführungsbeispiel.

Insgesamt betrachtet sind mit der erfindungsgemäßen Erwärmungseinrichtung 1 für ein Motor- und/oder Getriebeöl 29, 30 und dem erfindungsgemäßen Verfahren zum Erwärmen von Motor- und/oder Getriebeöl 29, 30 erhebliche Vorteile verbunden. Die Abwärme des Ladegerätes 5 und der Batterie 7 kann während des Stillstandes des Hybridfahrzeuges 2 zum Erwärmen des Motor- und Getriebeöles 29, 30 genutzt werden. Damit kann bei einem Start des Verbrennungsmotors 3 aufgrund des erwärmten Motor- und/oder Getriebeöles 29, 30 der Kraftstoffverbrauch des Verbrennungsmotors 3 zum Antrieb des Hybridfahrzeuges 2 signifikant reduziert werden.

## Patentansprüche

1. Verfahren zum Erwärmen von Motor- und/oder Getriebeöl (29, 30) eines Hybridfahrzeuges (2), insbesondere Plug-In-Hybridfahrzeug (2), mit einem Verbrennungsmotor (3) und einem Elektromotor (4),
**dadurch gekennzeichnet, dass**
das Getriebeöl (30) mittels der Abwärme eines Ladegerätes (6) für wenigstens eine Batterie (7) und/oder der Abwärme der wenigstens einen Batterie (7) erwärmt wird
und/oder
das Motoröl (29) mittels der Abwärme eines Ladegerätes (6) für wenigstens eine Batterie (7) und/oder der Abwärme der wenigstens einen Batterie (7) erwärmt wird und ein Fluidkreislauf (13, 14) mit Motoröl (29) als Fluid mit dem Ladegerät (6) und/oder mit der wenigstens einen Batterie (7) thermisch gekoppelt ist zum mittelbaren oder unmittelbaren Erwärmen des Motoröles (29).

2. Verfahren nach Anspruch 1,
**dadurch gekennzeichnet, dass**
das Motor- und/oder Getriebeöl (29, 30) während des Aufladens der wenigstens einen Batterie (7) erwärmt wird und/oder während des Stillstandes des Hybridfahrzeuges (2) erwärmt wird.

3. Verfahren nach Anspruch 1 oder 2,
**dadurch gekennzeichnet, dass**
das Motor- und/oder Getriebeöl (29, 30) vor Fahrtantritt erwärmt wird.

4. Verfahren nach einem oder mehreren der vorhergehenden Ansprüche,
**dadurch gekennzeichnet, dass**
die Abwärme zu dem Motor- und/oder Getriebeöl (29, 30) mittels Wärmekonvektion und/oder Wärmeleitung und/oder Wärmestrahlung geleitet wird.

5. Verfahren nach einem oder mehreren der vorhergehenden Ansprüche,
**dadurch gekennzeichnet, dass**
ein Fluidkreislauf (13, 14), insbesondere mit Getriebeöl (30) als Fluid, mit dem Ladegerät (6) und/oder mit der wenigstens einen Batterie (7) thermisch gekoppelt ist zum mittelbaren oder unmittelbaren Erwärmen des Motor- und/oder Getriebeöles (29, 30).

6. Verfahren nach Anspruch 5,
**dadurch gekennzeichnet, dass**
der Fluidkreislauf (13, 14) von der Abwärme des Ladegerätes (6) und/oder wenigstens einen Batterie (7) erwärmt wird.

7. Verfahren nach einem oder mehreren der vorhergehenden Ansprüche,
**dadurch gekennzeichnet, dass**
eine Ist-Temperatur des Motor- und/oder Getriebeöles (29, 30) erfasst wird,
die Ist-Temperatur mit einer Soll-Temperatur des Motor- und/oder Getriebeöles (29, 30) verglichen wird und
das Motor und/oder Getriebeöl (29, 30) bei einer Abweichung der Ist- Temperatur von der Soll-Temperatur erwärmt wird.

8. Verfahren nach einem oder mehreren der vorhergehenden Ansprüche,
**dadurch gekennzeichnet, dass**
für das Erwärmen des Motor- und/oder Getriebeöles (29, 30) nicht benötigte Abwärme in eine Umgebung (27) des Hybridfahrzeuges (2) und/oder in den Fahrzeuginnenraum (5) geleitet wird.

9. Erwärmungseinrichtung (1) für Motor- und/oder Getriebeöl (29, 30) eines Hybridfahrzeuges (2), insbesondere Plug-In-Hybridfahrzeug (2), mit einem Verbrennungsmotor (3) und einem Elektromotor (4), umfassend:
- einen Fluidkreislauf (13, 14) mit einem Fluid,
- wenigstens eine Wärmequelle (10) zur Erwärmung des Motor- und/oder Getriebeöles (29, 30) mittels des Fluidkreislaufes (13),
**dadurch gekennzeichnet, dass**
der Fluidkreislauf (13, 14) mit einem Ladegerät (6) und/oder wenigstens einer Batterie (7) thermisch gekoppelt ist, so dass die wenigstens eine Wärmequelle (10) das Ladegerät (6) und/oder die wenigstens eine Batterie (7) ist, um mittels der Abwärme des Ladegerätes (6) und/oder der wenigstens einen Batterie (7) das Getriebeöl (30) zu erwärmen und/oder
der Fluidkreislauf (13, 14) mit einem Ladegerät (6) und/oder wenigstens einer Batterie (7) thermisch gekoppelt ist, so dass die wenigstens eine Wärmequelle (10) das Ladegerät (6) und/oder die wenigstens eine Batterie (7) ist, um mittels der Abwärme des Ladegerätes (6) und/oder der wenigstens einen Batterie (7) das Motoröl (29) zu erwärmen und das Fluid des Fluidkreislaufes (13) das Motoröl (29) ist und das Motoröl (29) in dem Fluidkreislauf (13) zu dem Ladegerät (6) und/oder der wenigstens einen Batterie (7) leitbar ist zur Erwärmung des Motoröles (29) an dem Ladegerät (6) und/oder der wenigstens einen Batterie (7).

10. Erwärmungseinrichtung nach Anspruch 9,
**dadurch gekennzeichnet, dass**
das Fluid des Fluidkreislaufes (13) das Getriebeöl (30) ist und das Getriebeöl (30) in dem Fluidkreislauf (13) zu dem Ladegerät (6) und/oder der wenigstens einen Batterie (7) leitbar ist zur Erwärmung des Getriebeöles (30) an dem Ladegerät (6) und/oder der wenigstens einen Batterie (7).

11. Erwärmungseinrichtung nach Anspruch 9,
**dadurch gekennzeichnet, dass**
die Erwärmungseinrichtung (1) einen Zwischen-Fluidkreislauf (14) umfasst, der thermisch mit dem Ladegerät (6) und/oder mit der wenigstens einen Batterie (7) gekoppelt ist.

12. Erwärmungseinrichtung nach Anspruch 11,
**dadurch gekennzeichnet, dass**
der Zwischen-Fluidkreislauf (14) mittels eines M-Wärmeaustauscher (16) mit dem Motoröl (29) thermisch gekoppelt ist und/oder mittels eines G-Wärmeaustauschers (17) mit dem Getriebeöl (30) thermisch gekoppelt ist und/oder mittels eines F-Wärmetauschers (18) mit einem Fahrzeuginnenraum (5) thermisch gekoppelt ist.

13. Erwärmungseinrichtung nach einem oder mehreren der Ansprüche 9 bis 12,
**dadurch gekennzeichnet, dass**
die Erwärmungseinrichtung (1) einen L-Temperatursensor (21) zur Erfassung einer Ist-Temperatur des Ladegerätes (6) und/oder einen B- Temperatursensor (22) zur Erfassung einer Ist-Temperatur der wenigstens einen Batterie (7) umfasst.

14. Erwärmungseinrichtung nach einem oder mehreren der Ansprüche 9 bis 13,
**dadurch gekennzeichnet, dass**
die Erwärmungseinrichtung (1) einen F-Temperatursensor (23) zur Erfassung einer Ist-Temperatur des Fahrzeuginnenraumes (5) und/oder einen M-Temperatursensor (24) zur Erfassung einer Ist-Temperatur des Motoröls (29) und/oder einen G-Temperatursensor (25) zur Erfassung einer Ist-Temperatur des Getriebeöles (30) umfasst.

15. Erwärmungseinrichtung nach einem oder mehreren der Ansprüche 9 bis 14,
**dadurch gekennzeichnet, dass**
ein Verfahren gemäß einem oder mehrerer der Ansprüche 1 bis 8 ausführbar ist.

## Claims

1. Method for heating engine and/or transmission oil (29, 30) of a hybrid vehicle (2), in particular a plug-in hybrid vehicle (2), having an internal combustion engine (3) and an electric motor (4),
**characterized in that**
the transmission oil (30) is heated by means of the waste heat of a charging device (6) for at least one battery (7) and/or the waste heat of the at least one battery (7)
and/or
the engine oil (29) is heated by means of the waste heat of a charging device (6) for at least one battery (7) and/or the waste heat of the at least one battery (7), and a fluid circuit (13, 14) with engine oil (29) as the fluid is thermally coupled to the charging device (6) and/or to the at least one battery (7) in order to indirectly or directly heat the engine oil (29).

2. Method according to Claim 1,
**characterized in that**
the engine and/or transmission oil (29, 30) is heated during the charging of the at least one battery (7) and/or during the stationary state of the hybrid vehicle (2).

3. Method according to Claim 1 or 2,
**characterized in that**
the engine and/or transmission oil (29, 30) is heated before the start of a journey.

4. Method according to one or more of the preceding claims,
**characterized in that**
the waste heat is conducted to the engine and/or transmission oil (29, 30) by means of thermal convection and/or thermal conduction and/or thermal radiation.

5. Method according to one or more of the preceding claims,
**characterized in that**
a fluid circuit (13, 14), in particular with transmission oil (30) as the fluid, is thermally coupled to the charging device (6) and/or to the at least one battery (7) for indirectly or directly heating the engine and/or transmission oil (29, 30).

6. Method according to Claim 5,
**characterized in that**
the fluid circuit (13, 14) is heated by the waste heat of the charging device (6) and/or at least one battery (7).

7. Method according to one or more of the preceding claims,
**characterized in that**
an actual temperature of the engine and/or transmission oil (29, 30) is detected, the actual temperature is compared with a setpoint temperature of the engine and/or transmission oil (29, 30) and
the engine and/or transmission oil (29, 30) is heated when the actual temperature deviates from the setpoint temperature.

8. Method according to one or more of the preceding claims,
**characterized in that**
waste heat which is not required to heat the engine and/or transmission oil (29, 30) is conducted into the surroundings (27) of the hybrid vehicle (2) and/or into the passenger compartment (5) of the vehicle.

9. Heating device (1) for engine and/or transmission oil (29, 30) of a hybrid vehicle (2), in particular a plug-in hybrid vehicle (2), having an internal combustion engine (3) and an electric motor (4), comprising:
- a fluid circuit (13, 14) with a fluid, and
- at least one heat source (10) for heating the engine and/or transmission oil (29, 30) by means of the fluid circuit (13),
**characterized in that**
the fluid circuit (13, 14) is thermally coupled to a charging device (6) and/or at least one battery (7), with the result that the at least one heat source (10) is the charging device (6) and/or the at least one battery (7), in order to heat the transmission oil (30) by means of the waste heat of the charging device (6) and/or of the at least one battery (7)
and/or
the fluid circuit (13, 14) is thermally coupled to a charging device (6) and/or at least one battery (7), with the result that the at least one heat source (10) is the charging device (6) and/or the at least one battery (7) in order to heat the engine oil (29) by means of the waste heat of the charging device (6) and/or of the at least one battery (7), and the fluid of the fluid circuit (13) is the engine oil (29), and the engine oil (29) can be conducted to the charging device (6) and/or the at least one battery (7) in the fluid circuit (13) in order to heat the engine oil (29) at the charging device (6) and/or the at least one battery (7).

10. Heating device according to Claim 9,
**characterized in that**
the fluid of the fluid circuit (13) is the transmission oil (30), and the transmission oil (30) can be conducted to the charging device (6) and/or the at least one battery (7) in the fluid circuit (13) in order to heat the transmission oil (30) at the charging device (6) and/or the at least one battery (7).

11. Heating device according to Claim 9,
**characterized in that**
the heating device (1) comprises an intermediate fluid circuit (14) which is thermally coupled to the charging device (6) and/or to the at least one battery (7).

12. Heating device according to Claim 11,
**characterized in that**
the intermediate fluid circuit (14) is thermally coupled to the engine oil (29) by means of an M heat exchanger (16) and/or is thermally coupled to the transmission oil (30) by means of a G heat exchanger (17) and/or is thermally coupled to a passenger compartment (5) of a vehicle by means of an F heat exchanger (18).

13. Heating device according to one or more of Claims 9 to 12,
**characterized in that**
the heating device (1) comprises an L temperature sensor (21) for detecting an actual temperature of the charging device (6) and/or a B temperature sensor (22) for detecting an actual temperature of the at least one battery (7).

14. Heating device according to one or more of Claims 9 to 13,
**characterized in that**
the heating device (1) comprises an F temperature sensor (23) for detecting an actual temperature of the passenger compartment (5) of the vehicle and/or an M temperature sensor (24) for detecting an actual temperature of the engine oil (29) and/or a G temperature sensor (25) for detecting an actual temperature of the transmission oil (30).

15. Heating device according to one or more of Claims 9 to 14,
**characterized in that**
a method can be carried out according to one or more of Claims 1 to 8.

## Revendications

1. Procédé de chauffage de l'huile de moteur et/ou de l'huile de transmission (29, 30) d'un véhicule hybride (2), en particulier d'un véhicule hybride (2) à batterie rechargeable par le réseau et qui présente un moteur (3) à combustion interne et un moteur électrique (4),
**caractérisé en ce que**
l'huile de transmission (30) est chauffée au moyen de la chaleur dégagée par un appareil de charge (6) prévu pour au moins une batterie (7) et/ou par la chaleur dégagée par la ou les batteries (7) et/ou
**en ce que** l'huile de moteur (29) est chauffée au moyen de la chaleur dégagée par un appareil de charge (6) prévu pour au moins une batterie (7) et/ou par la chaleur dégagée par la ou les batteries (7) et
**en ce qu'**un circuit (13, 14) de fluide dont l'huile de moteur (29) est le fluide est raccordé thermiquement à l'appareil de charge (6) et/ou à la ou aux batteries (7) en vue de chauffer directement ou indirectement l'huile de moteur (29).

2. Procédé selon la revendication 1, **caractérisé en ce que** l'huile de moteur et/ou l'huile de transmission (29, 30) sont chauffées pendant la charge de la ou des batteries (7) et/ou pendant que le véhicule hybride (2) est à l'arrêt.

3. Procédé selon les revendications 1 ou 2, **caractérisé en ce que** l'huile de moteur et/ou l'huile de transmission (29, 30) sont chauffées avant le début d'un déplacement.

4. Procédé selon l'une ou plusieurs des revendications précédentes, **caractérisé en ce que** la chaleur dégagée est amenée à l'huile de moteur et/ou à l'huile de transmission (29, 30) par convection thermique, conduction thermique ou rayonnement thermique.

5. Procédé selon l'une ou plusieurs des revendications précédentes, **caractérisé en ce qu'**un circuit (13, 14) de fluide, dont le fluide est en particulier l'huile de transmission (30), est couplé thermiquement à l'appareil de charge (6) et/ou à la ou aux batteries (7) pour chauffer de manière directe ou indirecte l'huile de moteur et/ou l'huile de transmission (29, 30).

6. Procédé selon la revendication 5, **caractérisé en ce que** le circuit (13, 14) de fluide est chauffé par la chaleur dégagée par l'appareil de charge (6) et/ou par la ou les batteries (7).

7. Procédé selon l'une ou plusieurs des revendications précédentes, **caractérisé en ce que** la température effective de l'huile de moteur et/ou de l'huile de transmission (29, 30) est saisie, **en ce que** la température effective est comparée à une température de consigne de l'huile de moteur et/ou de l'huile de transmission (29, 30) et **en ce que** l'huile de moteur et/ou l'huile de transmission (29, 30) sont chauffées au cas où la température effective est différente de la température de consigne.

8. Procédé selon l'une ou plusieurs des revendications précédentes, **caractérisé en ce que** la chaleur dégagée non nécessaire pour chauffer l'huile de moteur et/ou l'huile de transmission (29, 30) est amenée dans l'environnement (27) du véhicule hybride (2) et/ou dans l'habitacle (5) du véhicule.

9. Dispositif (1) de chauffage de l'huile de moteur et/ou de l'huile de transmission (29, 30) d'un véhicule hybride (2), en particulier d'un véhicule hybride (2) rechargeable par le réseau et présentant un moteur (3) à combustion interne et un moteur électrique (4), le dispositif présentant :
un circuit (13, 14) de fluide doté d'un fluide et
au moins une source de chaleur (10) destinée à chauffer l'huile de moteur et/ou l'huile de transmission (29, 30) au moyen du circuit (13) de fluide,
**caractérisé en ce que**
le circuit (13, 14) de fluide est raccordé thermiquement à un appareil de charge (6) et/ou à au moins une batterie (7) de telle sorte que la ou les sources de chaleur (10) soient l'appareil de charge (6) et/ou la ou les batteries (7) pour chauffer l'huile de transmission (30) au moyen de la chaleur dégagée par l'appareil de charge (6) et/ou la ou les batteries (7) et/ou
**en ce que** le circuit (13, 14) de fluide est raccordé thermiquement à un appareil de charge (6) et/ou à au moins une batterie (7) de telle sorte que la ou les sources de chaleur (10) soient l'appareil de charge (6) et/ou la ou les batteries (7) pour chauffer l'huile de moteur (29 au moyen de la chaleur dégagée par l'appareil de charge (6) et/ou par la ou les batteries (7), le fluide du circuit (13) de fluide étant l'huile de moteur (29) et l'huile de moteur (29) présente dans le circuit (13) de fluide pouvant être amenée à l'appareil de charge (6) et/ou à la ou les batteries (7) pour chauffer l'huile de moteur (29) par l'appareil de charge (6) et/ou par la ou les batteries (7).

10. Dispositif de chauffage selon la revendication 9, **caractérisé en ce que** le fluide du circuit (13) de fluide est l'huile de transmission (30) et **en ce que** l'huile de transmission (30) présente dans le circuit (13) de fluide peut être amenée à l'appareil de charge (6) et/ou à la ou les batteries (7) pour chauffer l'huile de transmission (30) par l'appareil de charge (6) et/ou par la ou les batteries (7).

11. Dispositif de chauffage selon la revendication 9, **caractérisé en ce que** le dispositif de chauffage (1) comporte un circuit intermédiaire (14) de fluide raccordé thermiquement à l'appareil de charge (6) et/ou à la ou aux batteries (7).

12. Dispositif de chauffage selon la revendication 11, **caractérisé en ce que** le circuit intermédiaire (14) de fluide est raccordé thermiquement à l'huile de moteur (29) au moyen d'un échangeur de chaleur M (16), est raccordé thermiquement à l'huile de transmission (30) au moyen d'un échangeur de chaleur G (17) et/ou est raccordé thermiquement à l'habitacle (5) du véhicule au moyen d'un échangeur de chaleur F (18).

13. Dispositif de chauffage selon l'une ou plusieurs des revendications 9 à 12, **caractérisé en ce que** le dispositif de chauffage (1) présente un capteur de température L (21) qui saisit la température effective de l'appareil de charge (6) et/ou un capteur de température B (22) qui saisit la température effective de la ou des batteries (7).

14. Dispositif de chauffage selon l'une ou plusieurs des revendications 9 à 13, **caractérisé en ce que** le dispositif de chauffage (1) présente un capteur de température F (23) qui saisit la température effective de l'habitacle (5) du véhicule, un capteur de température M (24) qui saisit la température effective de l'huile de moteur (29) et/ou un capteur de température G (25) qui saisit la température effective de l'huile de transmission (30).

15. Dispositif de chauffage selon l'une ou plusieurs des revendications 9 à 14, **caractérisé en ce qu'**il permet d'exécuter un procédé selon l'une ou plusieurs des revendications 1 à 8.
